# EUROPEAN PATENT SPECIFICATION

(11) **EP 1 763 106 B1**
(45) Date of publication and mention of the grant of the patent: **31.12.2008**
(21) Application number: 06025109.7
(22) Date of filing: 20.11.2001
(51) Int. Cl.: H01Q 9/04, H01Q 1/24

(54) **Built-in antenna for a mobile radio**
Eingebaute Antenne für ein mobiles Funkgerät
Antenne incorporée pour un appareil de radiotéléphonie

(30) Priority: 22.11.2000 JP 2000355437
(43) Date of publication of application: 14.03.2007
(62) Divisional of application: 03026989.8
(73) Proprietor: Panasonic Corporation, Kadoma-shi Osaka 571-8501 (JP)
(72) Inventor: Iwai, Hiroshi, c/o Matsushita E. Ind. Co., Ltd., Chuo-ku,Osaka-shi ,Osaka 540-6319 (JP); Yamamoto, Atsushi c/o Matsushita E. Ind. Co., Ltd., Chuo-ku,Osaka-shi ,Osaka 540-6319 (JP); Ogawa, Koichi, c/o Matsushita E. Ind. Co., Ltd., Chuo-ku,Osaka-shi ,Osaka 540-6319 (JP); Kamaeguchi,Shinji c/o Matsushita E. Ind. Co., Ltd., Chuo-ku,Osaka-shi ,Osaka 540-6319 (JP); Takahashi,Tsukasa c/o Matsushita E. Ind. Co., Ltd., Chuo-ku,Osaka-shi ,Osaka 540-6319 (JP); Yamada, Kenichi, c/o Matsushita E. Ind. Co., Ltd., Chuo-ku,Osaka-shi ,Osaka 540-6319 (JP)
(74) Representative: Lang, Johannes

(56) References cited:
- EP-A- 1 052 723
- DE-A- 19 737 544
- US-A- 5 394 160

## Description

### Field of the Invention

The present invention relates to mobile radios and, more particularly, to mobile radios in which antennas are equipped for receiving and transmitting radio waves exemplified as mobile phone terminals.

### Description of the Background Art

The technology relating to mobile communications which is commonly applied to mobile phones, for example, has recently seen a rapid growth. In such mobile phones, antennas are considered especially important, and in keeping with the mobile terminals getting smaller, the antennas are required to be downsized to fit therein.

With reference to the accompanying drawing, described below is an exemplary mobile radio antenna conventionally equipped in mobile phone terminals.

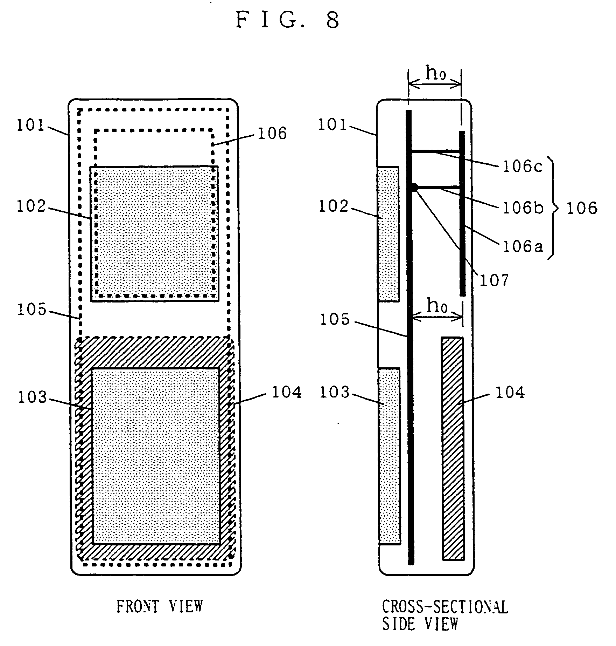

FIG. 8 schematically shows front and cross-sectional side views of a mobile phone terminal, e.g., mobile radio, which has a conventional mobile radio antenna equipped therein.

In FIG. 8, the conventional mobile phone terminal includes a cabinet 101, a display 102 exemplified by a liquid crystal display, a key section 103 exemplified by a ten-key numeric pad, a battery 104, a built-in antenna 106, and a base plate 105 for electrical connections among those constituents. The built-in antenna 106 is structured by an antenna element 106a of a planar configuration, and two metal leads 106b and 106c. This type of built-in antenna 106 is generally called as a planar inverted F antenna (PIFA). The antenna element 106a is provided with a predetermined voltage from a supply point 107 on the base plate 105 via the metal lead 106b. The antenna element 106a is connected to a ground (GND) level of the base plate 105 via the metal lead 106c. Here, the length of a perpendicular from the antenna element 106a to the base plate 105, i.e. , space therebetween, is defined as an antenna height h₀.

This antenna height h₀ considerably affects the characteristics of the built-in antenna 106 including resonant frequency and frequency bandwidth, i.e., the larger the height h₀, the better the antenna characteristics. Other than the height h₀, the deciding factors for the antenna characteristics are the size of the antenna element 106a, the positional relationship between the metal leads 106b and 106c, and the like.

However, the conventional mobile radio antenna structured as above has a problem that the larger height h₀ results in the thicker mobile phone terminals, thus failing in downsizing.

In order to reduce the thickness of the mobile phone terminals, on the other hand, there is no other choice but to reduce the antenna height h₀. This is because the display 102, a speaker, and other constituents which are placed on the other side of the base plate 105 having the built-in antenna 106 disposed thereon cannot be reduced in thickness for the purpose. With the smaller antenna height h₀, however, the capacitive coupling between the antenna element 106a and the base plate 105 is increased. This will result in poor matching, and accordingly lower the antenna characteristics.

An example of a mobile radio with an antenna formed on an in-sulated housing with a step is described in US-A 5 394 160.

### SUMMARY

It is therefore the object of the invention to provide a mobile radio with enhanced antenna characteristics.

This object is achieved by the mobile radio defined in claim 1 and claim 2.

The built-in antenna is structured by a plurality of planes, and the plurality of planes are structured as steps so that the space to the base plate is larger at the upper end than at the lower end.

Alternatively, the built-in antenna is a planar inverted F antenna including an antenna element, a supply connection member to which a predetermined voltage is supplied, and a short-circuiting connection member which is grounded to the base plate, and the supply connection member and the short-circuiting connection member are disposed on the upper end.

As described above, in the present invention, the antenna characteristics can be enhanced by putting the supply portion higher. At the same time, the closeness between the lower part of the antenna and the base plate will increase the capacitive coupling therebetween, and resultantly lower the resonant frequency of the antenna. Further, from a design perspective, users' hands do not cover the antenna part when holding the mobile radio, and the mobile radio has a better appearance.

Preferably, a shield is provided between the built-in antenna and the base plate, and the built-in antenna is fixed by a support base which is disposed on the shield.

With such a structure, the capacitive coupling can be controlled by adjusting the height of the shield, or the space between the shield and the built-in antenna, and this leads to easier impedance matching. Moreover, by fixing the built-in antenna with the help of the support base, the antenna characteristics can be stabilized.

Preferably, a cabinet which determines the outer appearance of the mobile radio is formed in accordance with the shape of the built-in antenna.

By doing so, from a design perspective, the mobile radio looks better, and users' fingers do not cover the antenna part when holding the mobile radio.

Alternatively, the cabinet is structured at least by a first section which houses the built-in antenna, and a second section which is the rest of the cabinet, and the built-in antenna is previously attached to the first section.

With the structure having the built-in antenna attached to the cabinet in advance with accuracy, the resonant frequency of the antenna can be stabilized. As a result, the antenna characteristics can be also stabilized, and thus the band characteristics can be reduced in margin.

Here, the base plate may be structured by an antenna-housing base plate on which the built-in antenna is disposed, and a circuit base plate which is the rest of the base plate, and in such a case, the antenna-housing base plate and the circuit base plate are not aligned on a same plane.

If this is the case, preferably, the antenna-housing base plate and the circuit base plate are electrically connected to each other via a side wall.

As such, by structuring the base plate by the antenna-housing base plate and the circuit base plate, and by placing the circuit base plate not to aligned with the antenna-housing base plate for the purpose of housing any other constituents, the built-in antenna can be made high enough without increasing the thickness of the mobile radio. Accordingly, the antenna characteristics are to be enhanced.

Preferably, a slit is provided in the vicinity of a junction between the antenna-housing base plate and the circuit base plate.

In this case, the length of the slit is set to a 1/4 wavelength of any desired resonant frequency.

With such a structure, the impedance considering the circuit base plate becomes maximum. Accordingly, the built-in antenna can be designed irrelevant to the circuit base plate, and the built-in antenna thus becomes more versatile, suitable for mass production.

Preferably, a space between the built-in antenna and the base plate is partially or entirely filled with a dielectric material.

As such, filling partially or entirely a space between the built-in antenna and the base plate with the dielectric material will downsize the built-in antenna, and also stabilize it on the base plate.

Still further, in the mobile radio of the present invention, the built-in antenna can resonate with at least two frequencies.

That is, the built-in antenna is provided with a short-circuiting connection members which determine, respectively, a first resonant frequency band and a second resonant frequency band, and either of the resonant frequency bands can be selectively covered by controlling conduction for the short-circuiting portions.

As a result, an antenna structure which selectively supplies two resonant frequency bands with a single built-in antenna can be realized.

Alternatively, the built-in antenna may be provided with a short-circuiting connection member and a slot which determine, respectively, a first resonant frequency band and a second resonant frequency band, and by an action of an antenna element and the slot, the first and second resonant frequency bands can be covered at the same time.

In other words, the entire antenna element determines the first resonant frequency band, and the slot part determines the second resonant frequency band. Therefore, an antenna structure which simultaneously supplies two resonant frequency bands with a single antenna can be realized.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a schematic illustration showing the structure of a mobile radio according to a first example;
FIGS. 2 and 3 are schematic illustrations showing other structures of the mobile radio according to the first example;
FIG. 4 is a schematic illustration showing the structure of a mobile radio according to a first embodiment of the present invention;
FIGS. 5 and 6 are schematic illustrations showing other structures of the mobile radio according to the first embodiment of the present invention;
FIG. 7 is a schematic illustration showing an exemplary cabinet applicable to the mobile radios according to the first embodiment of the present invention; and
FIG. 8 is a schematic illustration showing the structure of a conventional mobile radio.

### DESCRIPTION OF THE PREFERRED EMBODIMENTS

Described below are embodiments of the present invention by referring to the accompanying drawings.

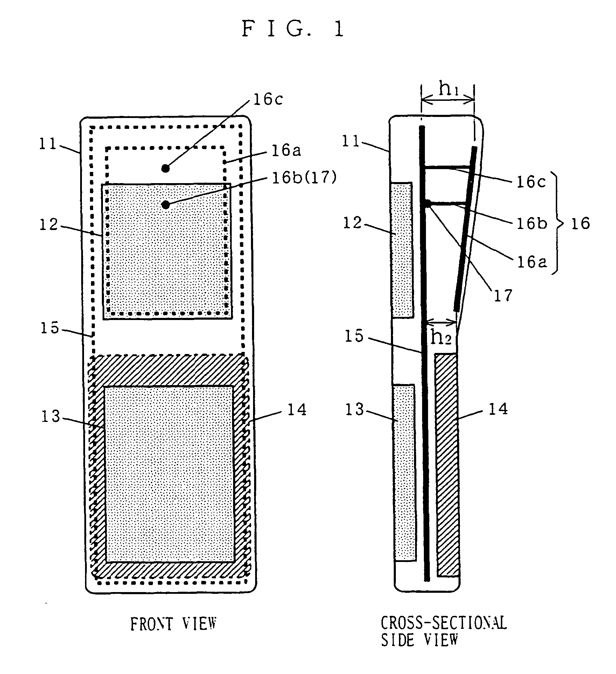

FIG. 1 schematically shows front and cross-sectional side views of a mobile radio according to a first example.

In FIG. 1, the mobile radio of the first example includes a cabinet 11, a display 12 exemplified by a liquid crystal display, a key section 13 exemplified by a ten-key numeric pad, a battery 14, a built-in antenna 16, and a base plate 15 for electrical connections among those constituents. The built-in antenna 16 is structured by an antenna element 16a of a planar configuration, and two metal leads 16b and 16c. The antenna element 16a is provided with a predetermined voltage from a supply point 17 on the base plate 15 via the metal lead 16b. The antenna element 16a is connected to a ground (GND) level of the base plate 15 via the metal lead 16c. Here, operating the GND pattern of a circuit board as the base plate is absolutely possible. Also, any cabinet or chassis made of conductive materials can be surely used as the base plate. Even if the cabinets or chassises are not conductive, covering those with the conductive material will do.

Here, drop perpendiculars from both upper and lower ends of the antenna element 16a to the base plate 15. The length of the perpendicular at the upper end is now referred to as an upper height h₁, while the length at the lower end as a lower height h₂. The antenna element 16a is so slanted against the base plate 15 as to satisfy h₁ > h₂. Here, it is important that the metal leads 16b and 16c are so disposed as to be longer than the lower height h₂. Therefore the metal leads 16b and 16c are to be placed on the upper side of the built-in antenna 16, that is, the upper part of the cabinet 11.

With such placement, the metal lead 16b from its connecting portion (supply portion) on the antenna element 16a to the base plate 15, and the metal lead 16c from its connecting portion (short-circuiting portion) on the antenna element 16a to the base plate 15 become higher than the lower height h₂. This leads to easier impedance matching, and thus the antenna characteristics will be enhanced. Moreover, by slanting the antenna element 16a against the base plate 15 as such, the lower height h₂ increases the capacitive coupling between the antenna element 16a and the base plate 15. This will reduce the resonant frequency of the antenna, whereby the antenna is to be successfully downsized.

In the case where the built-in antenna 16 is structured as above, the rear part of the cabinet 11 is so formed as to slant in accordance with the antenna element 16a as shown in FIG. 1. The rear part of the cabinet 11 thus looks smooth while ensuring the lower height h₂ of the built-in antenna 16 is smaller. As a result, from a design perspective, the mobile radio has a better appearance, and users' hands do not cover the antenna part when holding the mobile radio.

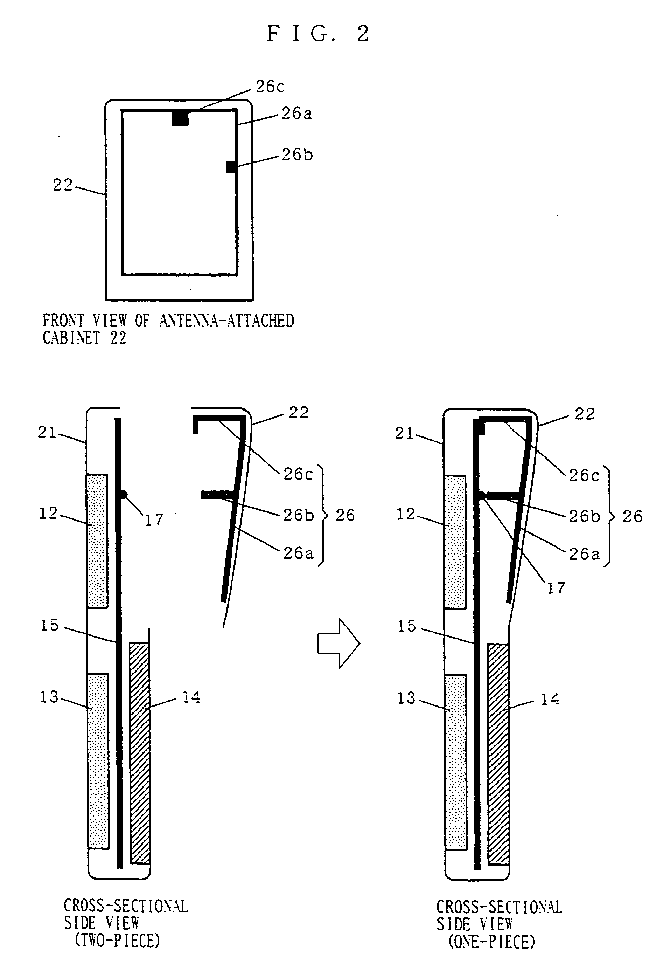

Here, instead of fixing the built-in antenna 16 of FIG. 1 to the base plate 15 as above, the built-in antenna 16 may be previously attached to the inside of the slanting part of the cabinet 11. FIG. 2 shows an example of the mobile radio in such a structure. Here, in FIG. 2, any constituent identical to that in FIG. 1 is provided with the same reference numeral.

The mobile radio of FIG. 2 is structured by a cabinet 21 and another cabinet with a built-in antenna 26 attached thereto hereinafter, antenna-attached cabinet 22). The built-in antenna 26 is composed of an antenna element 26a, and two metal leads, i.e., a supply pin 26 and a shirt-circuit pin 26c. The antenna element 26a is fixed (attached) to the inside of the antenna-attached cabinet 22. To the antenna element 26a, the supply pin 26b and the short-circuiting pin 26c are electrically connected. Once such structured antenna-attached cabinet 22 is put together with the cabinet 21, the supply pin 26b is electrically connected to the supply point 17, and the short-circuiting pin 26c to the ground surface of the base plate 15.

With such a structure having the built-in antenna attached to the antenna-attached case 22 in advance, space adjustment between the antenna element 26a and the antenna-attached case 22 can be made with accuracy.

The cabinet of the mobile radio is generally made of dielectric material, and thus the resonant frequency of the antenna varies depending on the positional relationship between the cabinet and the antenna, i.e., the closer, the lower the resonant frequency. Accordingly, with the structure having the built-in antenna attached to the cabinet in advance, the resonant frequency of the antenna can be stabilized. As a result, the antenna characteristics can be also stabilized, and thus the band characteristics can be reduced in margin.

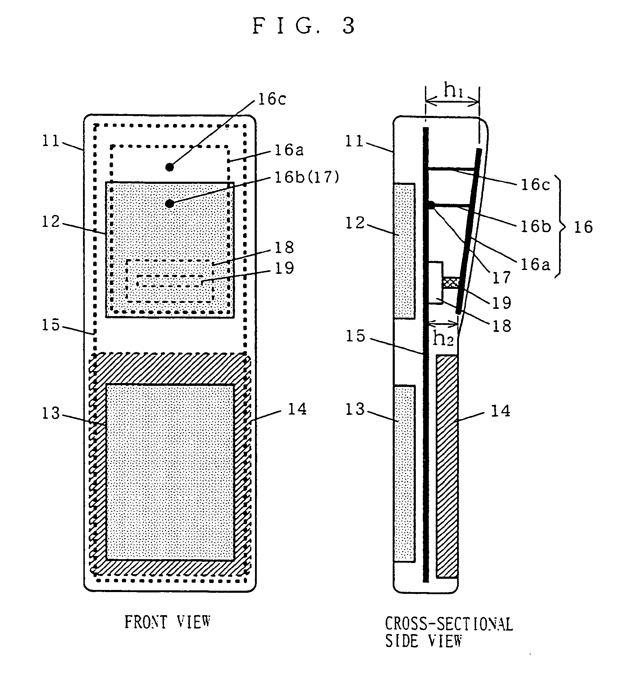

As another alternative structure, a shield may be placed between the built-in antenna 16 and the base plate 15 of FIG. 1. FIG. 3 shows an example of the mobile radio in such a structure. Here, in FIG. 3, any constituent identical to that in FIG. 1 is provided with the same reference numeral.

The mobile radio of FIG. 3 further includes a shield 18 and an antenna support base 19. The antenna element 16a is fixed via the antenna support base 19 to the shield 18, which is placed on the base plate 15. Assuming here that the shield 18 has a wireless circuit therein. The original purpose of placing the shield 18 is to protect the wireless circuit provided therein from radio waves radiated from the antenna. In this case, the shield 18 also can lead to easier impedance matching of the antenna. This is because the capacitive coupling can be controlled by adjusting the height of the shield 18, or the space between the shield 18 and the antenna element 16a. Furthermore, the characteristics of the built-in antenna 16 can be stabilized by fixing the built-in antenna 16 with the help of the antenna support base 19. Moreover, with the antenna support base 19 made of dielectric material, the resonant frequency of the antenna will be lowered so that the antenna can surely be downsized.

In the mobile radio of the present example, the built-in antenna 16 is slanted against the base plate 15 so that the antenna height, i.e., space to the base plate 15, at the upper part of the antenna is larger than that at the lower part. This structure is not restrictive, and the upper end of the cabinet may be rounded from a design perspective, or the antenna element 16a may be provided with a conductor wall to increase the capacitive coupling with the base plate 15, for example. In such cases also, the same effects as above are surely expectable.

As described above, according to the mobile radio of the first example, the built-in antenna is slanted against the base plate so that the space therebetween is decreased from the upper part to the lower, and the supply portion is placed on the upper. With such a structure, the antenna characteristics can be enhanced due to the supply portion placed on the upper, and the capacitive coupling can be increased due to the closeness between the lower part of the antenna and the base plate, successfully lowering the resonant frequency of the antenna. Furthermore, from a design perspective, users' hands do not cover the antenna part when holding the mobile radio, and the mobile radio has a better appearance.

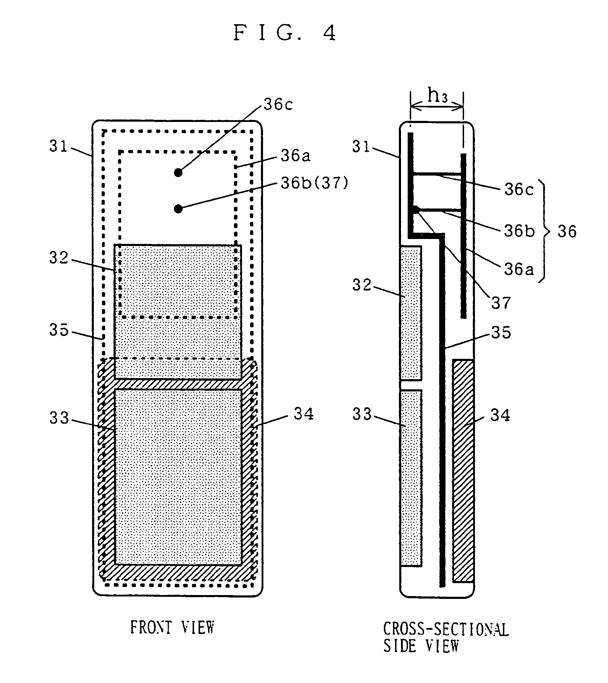

FIG. 4 schematically shows front and cross-sectional side views of a mobile radio according to a first embodiment of the present invention.

In FIG. 4, the mobile radio of the first embodiment includes a cabinet 31, a display 32 exemplified by a liquid crystal display, a key-section 33 exemplified by a ten-key numeric pad, a battery 34, a built-in antenna 36, and a base plate 35 for electrical connections among those constituents. The built-in antenna 36 is structured by an antenna element 36a of a planar configuration, and two metal leads 36b and 36c. The antenna element 36a is provided with a predetermined voltage from a supply point 37 on the base plate 35 via the metal lead 36b. The antenna element 36a is connected to a ground (GND) level of the base plate 35 via the metal lead 36c.

The base plate 35 is structured by an antenna-housing section which affects the antenna characteristics, and a circuit-housing section which is the rest of the base plate 35. Specifically, the antenna-housing section includes, for example, a portion (supply portion) at where the metal lead 36b is connected with the antenna element 36a, and a portion (short-circuiting portion) at where the metal lead 36c is connected with the antenna element 36a. In accordance with the desired antenna characteristics, the antenna-housing section is so positioned as to keep the built-in antenna 36 high enough, that is, to keep the space between the base plate 35 and the antenna element 36a large enough. The antenna-housing section is thus positioned toward the front side in the cabinet 31. On the other hand, the circuit-housing section is positioned toward the back of the cabinet 31 to provide a room for the display 32 and the key section 33. By structuring the base plate 35 as such, the cabinet 31 can accommodate the display 32 and the key section 33 therein without reducing the height h₃ of the built-in antenna 36. As a result, the cabinet 31 can be successfully reduced in thickness.

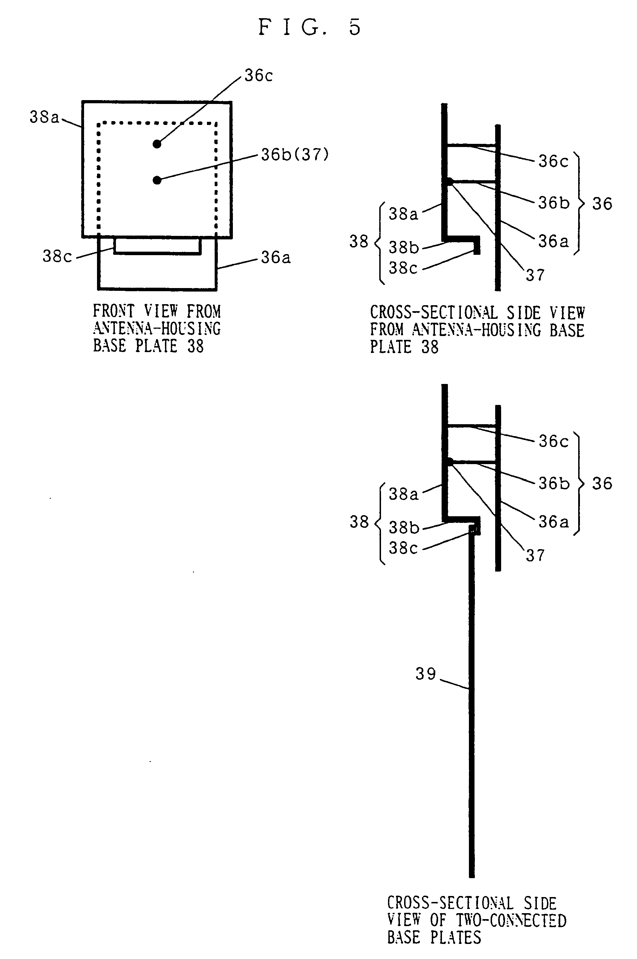

Here, alternatively, the base plate 35 may be structured by several base plates; some are for housing the built-in antenna, and some are for housing the circuit. FIG. 5 shows an example of the base plate in such a structure. Here, in FIG. 5, any constituent identical to that in FIG. 4 is provided with the same reference numeral.

In FIG. 5, the base plate is structured by an antenna-housing base plate 38, and a circuit base plate 39. The antenna-housing base plate 38 is composed of a base plate 38a, a side wall 38b, and a junction 38c. The base plate 38a is connected to the junction 38c via the side wall 38b. The built-in antenna 36 is placed on the base plate 38a. To assemble the base plate of this type, put the built-in antenna 36 first on the antenna-housing base plate 38, and then connect the antenna-housing base plate 38 to the circuit base plate 39 via the junction 38c. In such a manner, the antenna part, i.e., the antenna-housing base plate 38 plus the built-in antenna 36, can be manufactured separately, and thus the productivity will be increased.

In the first embodiment, characteristically, the antenna-housing base plate 38 and the circuit base plate 39 are formed and placed separately from each other so that their surfaces are not aligned on the same plane. Here, by adjusting the space between the side wall 38b and the antenna element 36a, the capacitive coupling can be accordingly controlled, and this can lead to easier impedance matching. Here, the junction 38c may simply abut to the circuit base plate 39 as long as electrical connection is established therebetween.

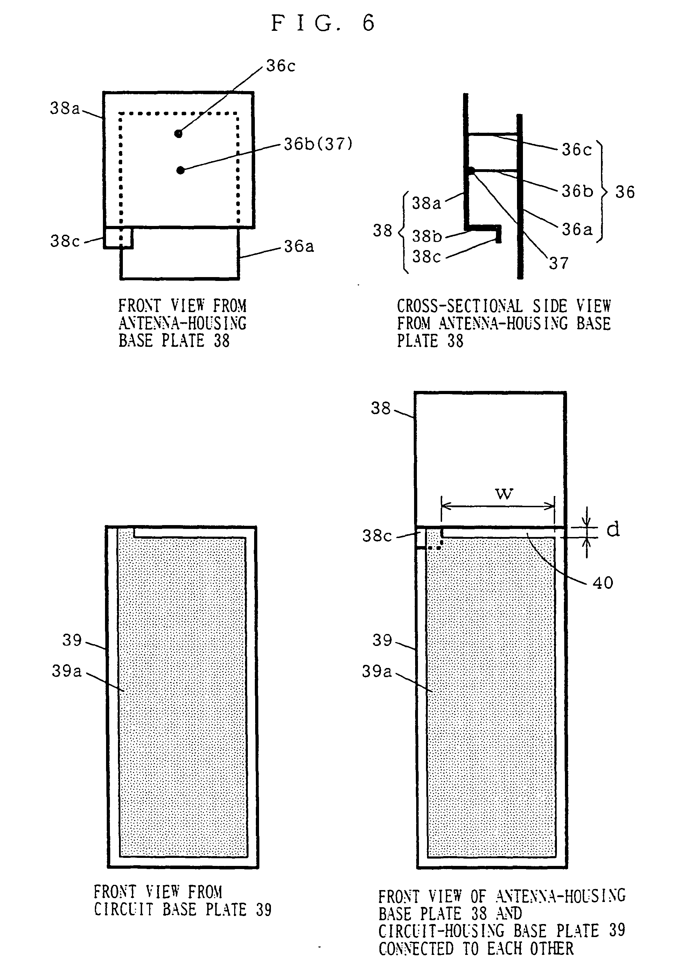

By referring to FIG. 6, if the junction 38c of the antenna-housing base plate 38 and a conductive pattern 39a on the circuit base plate 39 are both changed in shape, a slit 40 may be generated between the antenna-housing base plate 38 and the circuit base plate 39 when those are coupled to each other. In this case, if the slit 40 is so generated as to be 1/4 λ (wavelength) in length w, the impedance considering the circuit base plate 39 becomes maximum. Accordingly, the built-in antenna 36 can be designed irrelevant to the circuit base plate 39, and the built-in antenna 36 thus becomes more versatile, suitable for mass production. Explained by referring to FIG. 6 is the case where the slit 40 is adjusted in length *w* and width *d* by changing the junction 38c and the conductive pattern 39a in shape. Alternatively, the slit 40 may be adjusted by using any other parameters.

In the case of FIG. 6, although the slit 40 is provided between the antenna-housing base plate 38 and the circuit base plate 39, this is not restrictive. In the case where the base plate includes no side wall 38b as the base plate 15 of the first example, there is no problem of providing a slit.

Moreover, the characteristics of the built-in antenna may be optimized by adjusting, by the slit, the length of a current path. If this is the case, the number of slits is not restricted to one. For example, if a plurality of slits are provided, the base plate can be increased in size equivalently. Also, if the slits are provided to the base plate where the current distribution is high in such a manner as to across the current path, the base plate can be surely increased in size equivalently.

Here, the structures of the first example and first embodiment can surely be combined together. With the resultant structure, the antenna can be put higher so that the antenna characteristics can be enhanced.

As described above, in the mobile radio of the first embodiment, the base plate is structured by the antenna-housing section and the circuit-housing section, and these sections are so placed as not to align on the same plane for the purpose of providing a room for other constituents. With such a structure, the built-in antenna can be high enough without increasing the thickness of the mobile radio, successfully leading to enhancement in antenna characteristics.

Here, described in the first example and first embodiment are the cases where the built-in antenna is a planar inverted F antenna, and this is not restrictive. As to the first example, the same effects are surely achieved by slanting the built-in antenna so that the part of the antenna where the current distribution is the highest, i.e., the part where determines the height of the antenna, is put higher than the rest. The same effects are to be achieved by structuring, instead of slanting, the built-in antenna as steps to change the height thereof. As to the first embodiment, the same effects are surely achieved by structuring the built-in antenna in such a manner that the part of the antenna where the current distribution is the highest, i.e., the part where determines the height of the antenna, is put higher than the rest.

Here, although the mobile radios of the first example and first embodiment are provided with one antenna, this is not restrictive. The built-in antenna of the present invention is surely used together with an extendable whip antenna, or several of the built-in antennas are used together. In such case as well, the same effects are to be achieved.

The mobile radio of the present invention surely covers a plurality of frequency bands. In the case of using several antennas together, those antennas can be so structured as to cover a plurality of frequency bands. When using an antenna capable of covering a plurality of frequency bands, a short-circuiting portion (or a supply portion) for a first resonant frequency band, and a short-circuiting portion (or a supply portion) for a second resonant frequency band are both provided on its antenna element so that conduction for the short-circuiting portions (or voltage supply to the supply portions) are selectively controlled. With such a structure, either of the first resonant frequency band or the second resonant frequency band can be covered. In order to cover these two resonant frequency bands at the same time, the antenna element may be provided with a slot so that the original antenna element determines the first resonant frequency band, and the slot part the second resonant frequency band.

Moreover, filling partially or entirely a space between the built-in antenna and the base plate with the dielectric material will downsize the built-in antenna, and also stabilize it on the base plate.

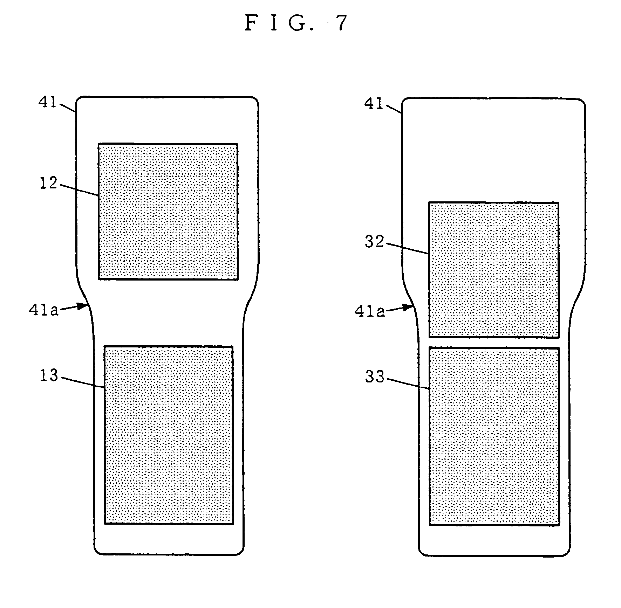

Lastly, as to the mobile radios of the first example and first embodiment, FIG. 7 shows an example of their cabinet which is designed to decrease in width at some point for the users to place their fingers thereon.

In FIG. 7, the width of a cabinet 41 is started to narrow at the lower end of the antenna-housing section which affects the antenna characteristics, and hereinafter the area therearound is referred to as a finger-placing section 41a. With the finger-placing section 41a, the users may hold the lower part of the mobile radio, and thus the antenna characteristics are prevented from being deteriorated. Moreover, since the upper part of the cabinet 41 remains wide, the width of the built-in antenna can be wider. Specifically for the mobile radio of the first example, the size of the display can be increased. The resultant mobile radio will be considered user-friendly as an information terminal.

Herein, it is surely possible to provide a plurality of finger-placing sections, and if so, arranging those in order in the vertical direction may ease the users to hold the mobile radio. Also, the users may know which part of the mobile radio they are expected to hold, avoiding the antenna part.

While the invention has been described in detail, the foregoing description is in all aspects illustrative and not restrictive. It is understood that numerous other modifications and variations can be devised without departing from the scope of the invention.

## Claims

1. A mobile radio having an antenna equipped for receiving and transmitting radio waves, said mobile radio comprising:
a display (32) mounted on the mobile radio;
a built-in antenna (36) mounted on the mobile radio; and
a base plate (35) disposed in a space between the display (32) and the built-in antenna (36), and the base plate (35) electrically connected to the built-in antenna (36), wherein
the base plate (35) includes an antenna-housing section in opposing relationship with the built-in antenna, said base plate having a step into the direction of the built-in antenna (36), and further including a circuit-housing section which is connected to the antenna-housing section via the step, a part of said circuit-housing section also in opposing relationship with the built-in antenna, wherein a distance between the antenna-housing section and the antenna is larger than a distance between the circuit-housing section and the antenna, and the display is disposed in a space between a wall of a cabinet (31) of the mobile radio and the circuit-housing section.

2. A mobile radio having an antenna equipped for receiving and transmitting radio waves, said mobile radio comprising:
a display (32) mounted on the mobile radio;
a built-in antenna (36) mounted on the mobile radio;
an antenna-housing base plate (38) in opposing relationship with the built-in antenna, said antenna-housing base plate electrically connected to the built-in antenna (36) and having a step (38b, 38c) into the direction of the built-in antenna (36) and is disposed in a space between a wall of the cabinet (31) of the mobile radio and the built-in antenna (36); and
a circuit base plate (39) electrically connected to the antenna-housing base plate (38) via the step (38b, 38c) and disposed in a space between the display (32) and the built-in antenna (36), a part of the circuit base plate also in opposing relationship with the antenna, wherein
a distance between the antenna-housing base plate (38) and the built-in antenna (36) is larger than a distance between the circuit base plate (39) and
the built-in antenna (36), and wherein the display is disposed in a space between a wall of the cabinet (31) and the circuit base plate (39).

## Patentansprüche

1. Mobilfunkgerät mit einer Antenne, die zum Empfangen und Senden von Radiowellen ausgerüstet ist, wobei das Mobilfunkgerät enthält:
eine Anzeigevorrichtung (32), die auf dem genannten Mobilfunkgerät montiert ist:
eine eingebaute Antenne (36), die auf dem genannten Mobilfunkgerät montiert ist; und
eine Grundplatte (35), die in einem Raum zwischen der Anzeigevorrichtung (32) und der eingebauten Antenne (36) angeordnet ist und die Grundplatte (35) mit der eingebauten Antenne (36) elektrisch verbunden ist, worin
die Grundplatte (35) einen Antennen-Aufnahme-Bereich enthält, der gegenüber der eingebauten Antenne angeordnet ist, wobei die genannte Grundplatte eine Stufe in Richtung der eingebauten Antenne (36) aufweist, und weiter enthaltend
ein Schaltungs-Aufnahme-Bereich, der mit dem Antennen-Aufnahme-Bereich über die Stufe verbunden ist, wobei ein Teil des genannten Schaltungs-Aufnahme-Bereichs ebenfalls gegenüber der eingebauten Antenne angeordnet ist, worin ein Abstand zwischen dem Antennen-Aufnahme-Bereich und der Antenne größer ist als ein Abstand zwischen dem Schaltungs-Aufnahme-Bereich und der Antenne,
und die Anzeigevorrichtung in einem Raum zwischen einer Wand eines Gehäuses (31) des Mobilfunkgeräts und des Schaltungs-AufnahmeBereichs angeordnet ist.

2. Ein Mobilfunkgerät mit einer Antenne, die zum Empfangen und zum Senden von Radiowellen ausgerüstet ist, wobei das Mobilfunkgerät enthält:
eine Anzeigevorrichtung (32), die auf dem Mobilfunkgerät montiert ist;
eine eingebaute Antenne (36), die auf dem Mobilfunkgerät montiert ist;
eine Antennen-Aufnahme Grundplatte (38), die gegenüber der eingebauten Antenne angeordnet ist, wobei die Antennen-Aufnahme-Grundplatte elektrisch mit der eingebauten Antenne (36) verbunden ist und eine Stufe (38a, 38b) aufweist in Richtung der eingebauten Antenne (36) und in einem Raum angeordnet ist zwischen einer Wand des Gehäuses (31) des Mobilfunkgeräts und der eingebauten Antenne (36); und
eine Schaltungs-Grundplatte (39), die mit der Antennen-Aufnahme-Grundplatte (38) über die Stufe (38a, 38b) verbunden ist und in einem Raum zwischen der Anzeigevorrichtung (32) und der eingebauten Antenne (36) angeordnet ist, wobei ein Teil der Schaltungs-Grundplatte gegenüber der Antenne angeordnet ist, worin
ein Abstand zwischen der Antennen-Aufnahme-Grundplatte (38) und der eingebauten Antenne (36) größer ist als ein Abstand zwischen der Schaltungsgrundplatte (39) und der eingebauten Antenne (36) und worin die Anzeigevorrichtung in einem Raum zwischen einer Wand des Gehäuses (31) und der Schaltungsgrundplatte (39) angeordnet ist.

## Revendications

1. Une radio mobile ayant une antenne équipée pour recevoir et émettre des ondes radio, ladite radio mobile comprenant :
un afficheur (32) monté sur la radio mobile ;
une antenne intégrée (36) montée sur la radio mobile ; et une plaque de base (35) disposée dans un volume compris entre l'afficheur (32) et l'antenne intégrée (36), et la plaque de base (35) étant électriquement reliée à l'antenne intégrée (36), dans laquelle
la plaque de base (35) inclut une section de logement d'antenne en relation d'opposition avec l'antenne intégrée, ladite plaque de base présentant un degré dans la direction de l'antenne intégrée (36), et comprenant en outre une section de logement de circuit qui est reliée à la section de logement d'antenne via le degré, une partie de ladite section de logement de circuit étant également en relation d'opposition avec l'antenne intégrée, une distance entre la section de logement d'antenne et l'antenne étant supérieure à une distance entre la section de logement de circuit et l'antenne, et l'afficheur est disposé dans un volume compris entre une paroi d'un boîtier (31) de la radio mobile et la section de logement de circuit.

2. Une radio mobile ayant une antenne équipée pour recevoir et émettre des ondes radio, ladite radio mobile comprenant :
un afficheur (32) monté sur la radio mobile ;
une antenne intégrée (36) montée sur la radio mobile ;
une plaque de base de logement d'antenne (38) en relation d'opposition avec l'antenne intégrée, ladite plaque de base de logement d'antenne étant électriquement reliée à l'antenne intégrée (36) et comportant un degré (38b, 38c) dans la direction de l'antenne intégrée (36) et est disposée dans un volume compris entre une paroi du boîtier (31) de la radio mobile et l'antenne intégrée (36) ; et
une plaque de base de circuit (39) électriquement reliée à la plaque de base de logement d'antenne (38) via le degré (38b, 38c) et disposée dans un volume compris entre l'afficheur (32) et l'antenne intégrée (36), une partie de la plaque de base de circuit étant également en relation d'opposition avec l'antenne, une distance entre la plaque de base de logement d'antenne (38) et l'antenne intégrée (36) étant supérieure à une distance entre la plaque de base de circuit (39) et l'antenne intégrée (36), et dans laquelle l'afficheur est disposé dans un volume compris entre une paroi du boîtier (31) et la plaque de base de circuit (39).
